# EUROPEAN PATENT SPECIFICATION

(11) **EP 2 842 842 B1**
(45) Date of publication and mention of the grant of the patent: **21.03.2018**
(21) Application number: 14183415.0
(22) Date of filing: 03.09.2014
(51) Int. Cl.: B62D 37/00, B62D 35/00

(54) **Vehicle rear structure**
Heckstruktur eines Fahrzeugs
Structure arrière de véhicule

(30) Priority: 03.09.2013 JP 2013182456
(43) Date of publication of application: 04.03.2015
(73) Proprietor: Honda Motor Co., Ltd., Tokyo 107-8556 (JP)
(72) Inventor: Kizierowski, Wojciech, Swindon, Wiltshire SN3 4TZ (GB); Saito, Hajime, Swindon, Wiltshire SN3 4TZ (GB)
(74) Representative: Weickmann & Weickmann PartmbB

(56) References cited:
- EP-A1- 2 511 162
- EP-A1- 2 572 966
- DE-A1-102006 019 777
- FR-A1- 2 892 993
- US-A- 4 925 236

## Description

The present invention relates generally to a vehicle rear structure and, more particularly, to a vehicle rear structure having a rear window glass pane having a side spoiler extending along a side edge thereof.

It is known to provide a spoiler at a peripheral edge of a rear window glass pane of a vehicle so as to cause a travel wind to flow smoothly and to impart an improved decorativeness or aesthetic appearance to the vehicle. Herein, the term "travel wind" is used to represent a stream of air that flows by a vehicle upon travel of the vehicle. A spoiler disposed to extend along a side edge of a window glass pane is called a "side spoiler". A conventional technique related to a vehicle having a side spoiler is disclosed in, e.g., Japanese Patent Application Laid-Open Publication No. 2012-136066 (JP 2012-136066 A).

The vehicle disclosed in JP 2012-136066 A includes a rear window glass pane with side spoilers disposed on opposite side edges to extend therealong. In making the side spoilers, a resin is used as a base material and they are formed to have a hollow section.

EP 2 511 162 A1 discloses a vehicle side body structure including a side spoiler, made from one single part, for separating, from side surface panel, air flowing rearwardly from in front of the vehicle body along the side surface panel. The side spoiler is located below a boundary portion between the side surface panel and a rear window glass in a vehicle height direction and above an uppermost portion of a wheel arch section.

FR 2 892 993 A1 discloses a side spoiler located on a rear side surface of a vehicle body and extending along a side edge portion of a rear window glass. The spoiler comprises two parts, an outer member, and an inner member. The side spoiler outer member is pivotally attached to the inner member. The inner member is attached to the vehicle body.

EP 2 572 966 A1 discloses a side spoiler made of a single integral part, fixed to the rear fender panel along the lower front side of the lid lamp unit. The side spoiler partly covers an air outlet opening arranged on a rear fender panel at a boundary portion between the rear fender panel and rear combination lamp and an air intake opening arranged rearward a wheel house of a rear vehicle body for introducing air flowing along an underside of the vehicle body as a running air. The running air is introduced from the air intake opening and discharged through the air outlet opening.

Resinous parts of hollow section are produced through processes such as injection molding and blow molding. In producing a resinous part of hollow section by injection molding, a gas is used to hollow the inside of a resinous part blank. In case such a production process is adopted, the resulting spoilers become expensive because the process involves steps that are complex compared to ordinary injection molding processes. On the other hand, blow molding is known to have the drawback that the deviation of wall thickness is liable to arise. Thus, an increased cost of production should be expected in obtaining side spoilers having a desired uniform wall thickness. This will add up to the costs of production of a vehicle having such a side spoiler.

It is therefore an object of the present invention to provide a vehicle provided with a side spoiler which is imparted with improved aerodynamic design characteristics while it is produced inexpensively.

According to the present invention, there is provided a vehicle rear structure in accordance with claim 1.

The side spoiler comprises: an inner member attached to a body of the vehicle, and an outer member laid over the inner member and forming a vehicle-widthwise outer surface of the rear window glass pane.

Since the side spoiler is comprised of two members, namely, a member on the vehicle body side and a member on the design surface side, the side spoiler can be produced through an ordinary process of injection molding. Since the side spoiler can be produced through a highly universal process, the side spoiler can be manufactured inexpensively. As a result, the cost of manufacture of the associated vehicle can be decreased.

It should additionally be noted that the side spoiler is provided at a side edge part of the rear window glass pane. In other words, the side spoiler is provided at a position and at a substantially eye height so that it can be visually recognized easily. This requires the side spoiler to have a high design feature. For design reasons, the side spoiler is required to be changed to a new one. In this instance, all needed is to change the outer member. This is far less expensive than changing the side spoiler in its entirety.

It is preferred that the vehicle further comprises a first external member provided at that part of the vehicle body which adjoins the outer member, and that end part of the outer member which adjoins the first external member be laid underneath a back side of a design surface of the first external member.

It is desired that the vehicle further comprises a vehicle side member provided at that part of the vehicle body which is located forward of the side spoiler in adjoining relation to the side spoiler and that end part of the side spoiler which is positioned forwardly of the vehicle and adjoins the vehicle side member be curved laterally inwardly of the vehicle further than a design surface of the vehicle side member.

It is preferred that the vehicle further comprises a second external member mounted to that part of the vehicle body which adjoins the first external member and the side spoiler and that end part of the outer member which adjoins the second external member is laid underneath a back side of a design surface of the second external member.

It is desired that the vehicle further comprises a rear spoiler provided on a rear surface of the vehicle in adjoining relation to the side spoiler, and the rear spoiler and the side spoiler have respective design surfaces at a boundary therebetween, which are laid flush with each other.

The inner member may be made from an ABS resin.

Certain preferred embodiments of the present invention will be described in detail below with reference to the accompanying drawings, in which:
FIG 1 is a perspective view illustrating a rear part of a vehicle according to an embodiment of the present invention;
FIG. 2 is a schematic view illustrating a relationship between the vehicle and a side spoiler of FIG. 1;
FIG. 3 is a exploded view of the side spoiler of FIG. 1;
FIG. 4 is a cross-sectional view taken along line 4 - 4 of FIG. 1;
FIG. 5 is a view showing the vehicle rear part of FIG. 1, as seen in the direction of arrow 5;
FIGS. 6A and 6B illustrate a mode of mounting of a second exterior part shown in FIG. 5;
FIG. 7 is a cross-sectional view taken along line 7 - 7 of FIG. 1;
FIG. 8 is a cross-sectional view taken along line 8 - 8 of FIG. 1; and
FIG. 9 is a cross-sectional view taken along line 9 - 9 of FIG. 1.

Throughout the specification, the terms "right" and "left" represent directions as seen from a driver while the terms "front" and "rear" represent front and rear directions taken relative to a vehicle. Note also that in the drawings, reference characters "Fr", "Rr", "Ce", "Up" and "Dw" represent front, rear, central, top and bottom directions taken with respect to the vehicle.

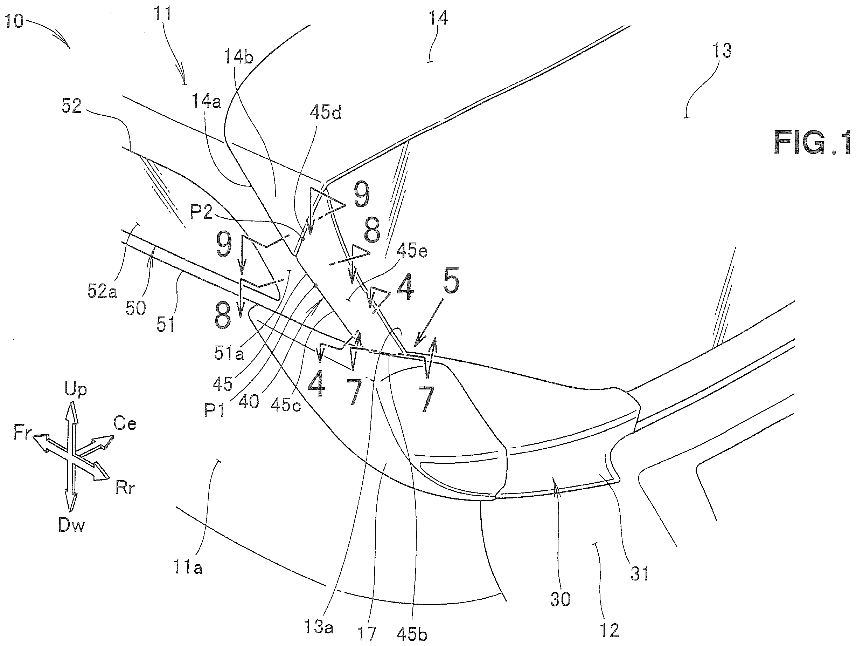

Shown in FIG. 1 is a left rear part of the vehicle 10. A tailgate 12 is swingably attached to the rear part of a vehicle body 11 forming the vehicle 10. Attached to the tailgate 12 are a rear window glass pane 13, a rear spoiler 14 extending along an upper edge of the rear window glass pane 13, a side spoiler 40 positioned below the rear spoiler 14 and extending along a side edge of the rear window glass pane 13, and a lid lamp unit 30 disposed in the vicinity of the side spoiler 40. Stated otherwise, the rear window glass pane 13, the rear spoiler 14, the side spoiler 40 and the lid lamp unit 30 are mounted to the vehicle body 11 through the tailgate 12. The lid lamp unit 30 comprises a tail-and-stop lamp which is the integration of a tail lamp and a brake lamp, not shown.

A rear quarter window glass pane 50 (vehicle side member 18) is mounted to that part of a side part 11a of the vehicle body 11 which corresponds to a front part of the side spoiler 40. Provided continuously with the lid lamp unit 30 is a vehicle-body-side lamp unit 17.

The side spoiler 40, the lid lamp unit 30, the rear quarter window glass pane 50 and the vehicle-body-side lamp unit 17 are also provided on a right side end part symmetrically.

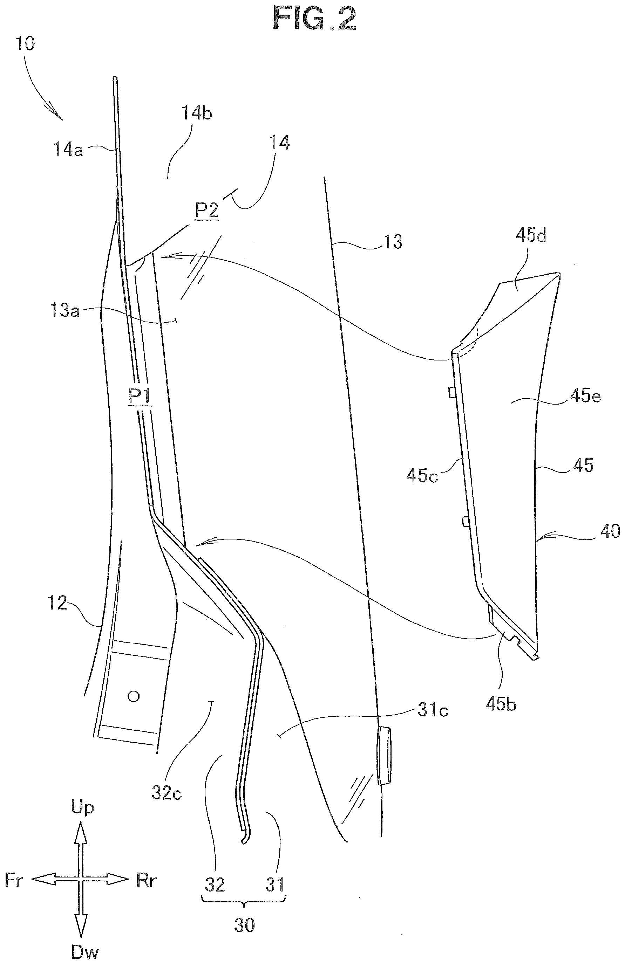

As shown in FIG. 2, the lid lamp unit 30 is comprised of a lamp body part part 31 (first external member) with a source of light covered with a lens, and a lid lamp bezel 32 (second external member) provided at an outer periphery of the lamp body part part 31 so as to decorate the latter.

The side spoiler 40 is disposed between the rear spoiler 14 and the lid lamp unit 30 in a height or direction. An end of the side spoiler 40, whose details will be discussed below, is covered by the lid lamp unit 30.

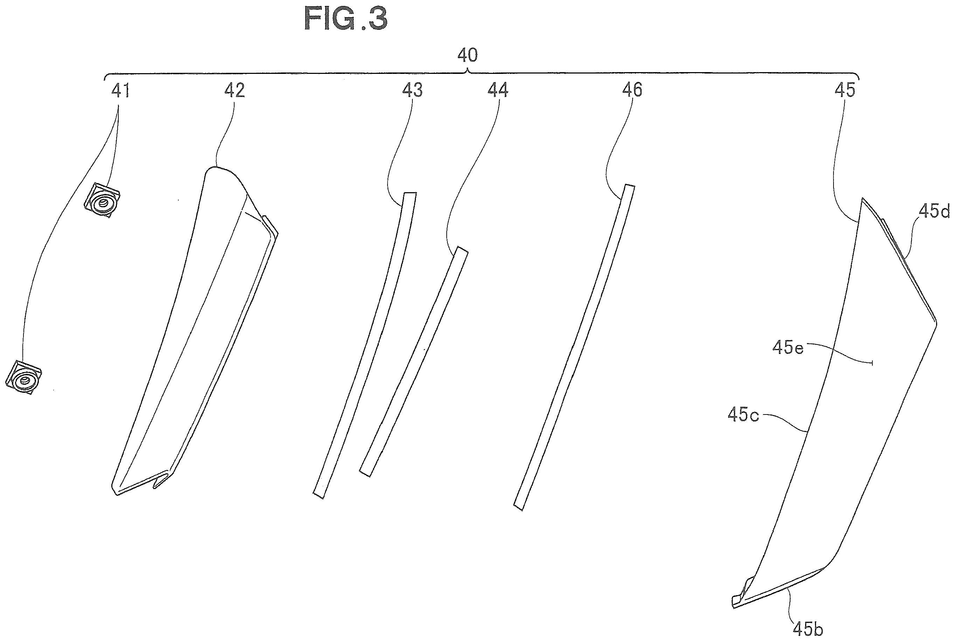

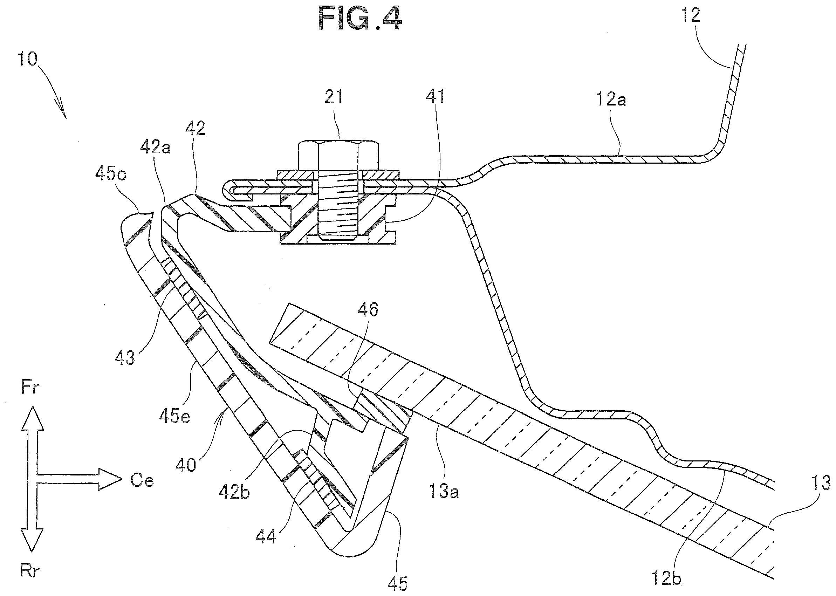

As shown in FIGS. 3 and 4, the side spoiler 40 includes a nut member 41 fastened to the tail gate 12 via a bolt 21 and being centrally nut-shaped, an inner member 42 connected to the nut member 41, double-sided adhesive tapes 43, 44 adhered to a design surface of the inner member 42, an outer member 45 adhered to the inner member 42 through the double-sided adhesive tapes 43, 44 and covering the inner member 42, a seal member 46 interposed between the rear window glass pane 13 and the outer and inner members 45, 42. The tail gate 12 is formed into a closed cross section by a vehicle-compartment-side inner member 12a and a vehicle-outer-side outer member 12b joined together in an overlapping fashion.

The inner member 42 has a base part 42a and an extension part 42b extending from the base part 42a. The base part 42a has one end engaged with the nut member 41 (mounting part to the vehicle body) and extends from the engaged part toward one end of the outer member 45 until an opposite end of the base part 42a comers to press the seal member 46 against the rear window glass pane 13.

The extension part 42b is substantially L-shaped and extends from a vicinity of the opposite end of the base part 42a toward and along the outer member 45.

The double-sided adhesive tape 43 is adhered to that part of the base part 42a which corresponds to one end of the outer member 45 while the double-sided adhesive tape 44 is adhered to that part of the extension part 42b which corresponds to an opposite end of the outer member 45. By thus configuring the inner member 42, it becomes possible to adhere the seal member 46 to the opposite ends of the outer member 45 while firmly holding the seal member 46. The extension part 42b may be extended from that part of the base part 42a which corresponds to the vicinity of the opposite end of the outer member 45, whereby required resin quantity can be reduced.

The side spoiler 40 is comprised of two members, one on the vehicle body side and the other on the design surface side. Thus, the side spoiler 40 can be produced by an ordinary injection molding. In other words, the side spoiler 40 can be produced by a universal process, thereby reducing the cost of production of the side spoiler 40 and hence the vehicle 10 employing the side spoiler 40.

It should also be noted that the side spoiler 40 is a member which is provided to a side edge part 13a of the rear window glass pane 13. In other words, the side spoiler 40 is provided at a location which can be readily recognized visually from outside. Since the side spoiler 40 is positioned at a height of a line of sight of a human outside the vehicle, it needs to have an improved design property. For this reason, the side spoiler 40 is often required to be altered in terms of design. In such a case, only the outer member 45 may be altered. This is less expensive than altering the side spoiler 40 in its entirety. Even when an improved aerodynamic property is desired, nothing is required than changing the outer member 45 to a new outer member. Stated otherwise, it is not required to change the side spoiler 40 in its entirety. As a result, parts change can be effectuated inexpensively so as to obtain a desired improved aerodynamic property.

Note additionally that the inner member 42 is made from an ABS resin (acrylonitrile butadiene styrene copolymer). ABS resins are highly resistive to impacts from outside. Thus, the inner member 42 has sufficient rigidity against impacts arising from opening/closing actions of the tailgate and against vibrations produced during travel of the vehicle. Similarly to the inner member 42, the outer member 45 may also be formed from an ABS resin so as to obtain desired similar effects.

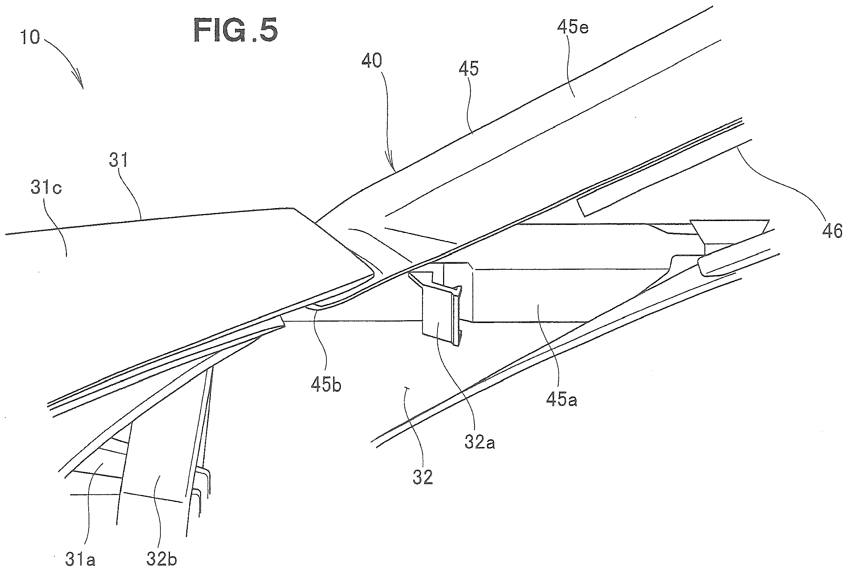

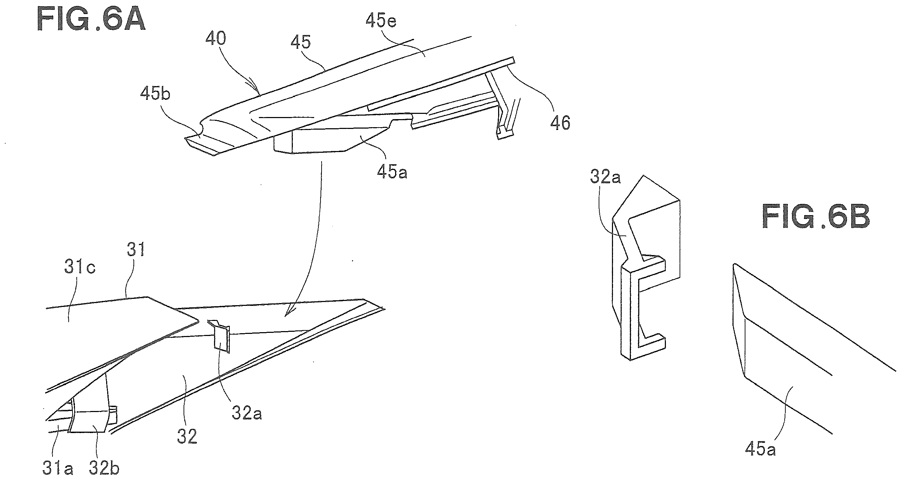

As can be appreciated from FIG. 5, FIG. 6A and FIG. 6B, the lid lamp bezel 32 has a generally U-shaped first pawl 32a and a generally triangular-shaped second pawl 32b. A spoiler-side engagement piece 45a, which is capable of fitted engagement with the first pawl 32a, is provided at a rear lower end part of the outer member 45. A lid-lamp-side engagement piece 31a, which is capable of fitted engagement with the second pawl 32b, is provided at an end part of the lamp body part 31. The outer member 45 and the lamp body part 31 are brought into fitted engagement with the lid lamp bezel 32, whereby they are limited in an amount of movement relative to the lid lamp bezel 32. Further, owing to the first and second pawls 32a, 32b provided to the lid lamp bezel 32, the outer member 45, the lamp body part 31 and the lid lamp bezel 32 are unitarily coupled together.

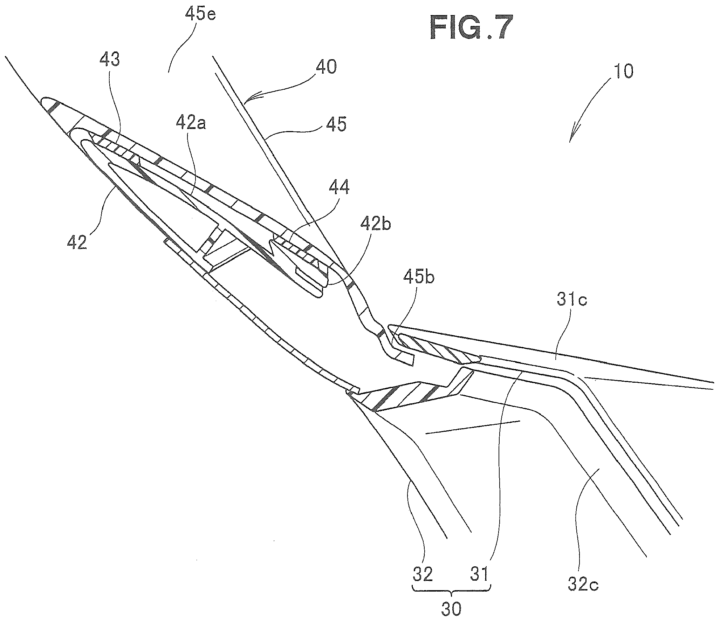

Referring also to FIG. 7, that end part 45b of the outer member 45 which adjoins the lid lamp unit 30 is laid on a reverse or back side of the design surface 31c or 32c of the lamp body part 31 or the lid lamp bezel 32. The end part 45b that adjoins the lid lamp unit 30 is curved to extend away from an adjacent end of the lamp body part 31.

With the outer member end part 45b positioned underneath the design surface, the border region between the outer member 45 and the lid lamp unit 30 becomes less noticeable, whereby the outer aesthetic appearance of the vehicle 10 is improved.

An external force, associated with a travel wind and so forth, is often applied to the side spoiler 40 to make the latter float up. Since the end part of the outer member 45 is positioned underneath the back side of the lid lamp unit 30, the end part 45b of the outer member 45 is brought into abutment with the back sides of the design surfaces 31c, 32c of the lid lamp unit 30, whereby the side spoiler 40 is prevented from floating up from the tailgate 12.

Note particularly that the lamp body part 31 and the outer member 45 are brought into fitted engagement with the lid lamp bezel 32 and that the end part 45b of the outer member 45 is positioned underneath the back sides of the design surfaces 31c, 32c of the lamp body part 31 and the lid lamp bezel 32. As a result, their relative movement is more restricted, whereby float-up of the side spoiler 40 can be effectively suppressed.

That part of the outer member 45 which is positioned underneath the lamp body part 31 or the lid lamp bezel 32 has a curved shape. This makes it possible to render a clearance between the side spoiler 40 and the lid lamp unit 30 less visible. This leads to the further advantage that insides can hardly be seen through the clearance, thereby improving external looks of the vehicle.

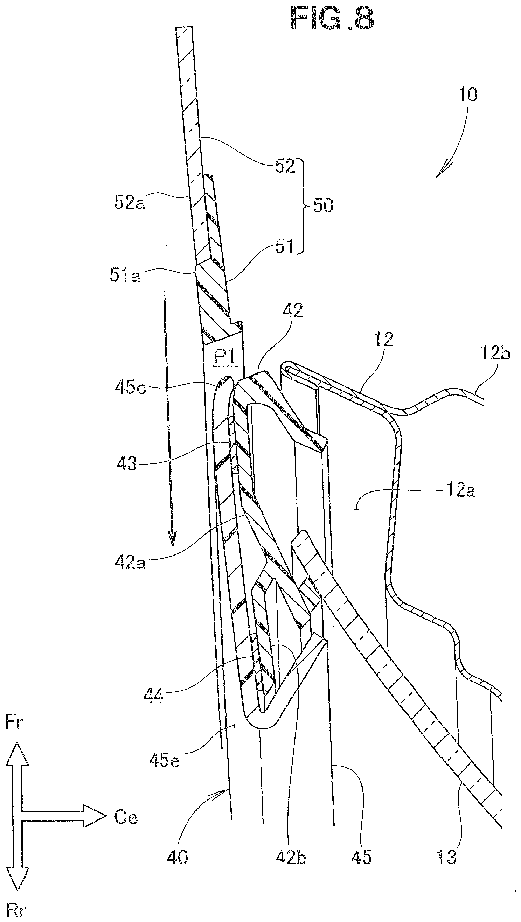

As shown in FIG. 8, the rear quarter window glass pane 50 includes a resinous frame member 51 supported at the side part 11a of the vehicle body 11, and a window panel 52 with an outer peripheral edge covered by the frame member 51. The vehicle-outside-facing design surfaces of the frame member 51 and the window panel 52 are laid flush with each other.

The outer member 45 (side spoiler 40) has an end part (vehicle-forward end) 45c curved laterally inwardly of the vehicle further than the design surfaces 51a, 52a of the rear quarter window glass pane 50.

At the boundary P1 between the side spoiler 40 and the rear quarter window glass pane 50, it is possible to let the travel wind flow rearward smoothly. That is, it becomes possible to suppress splitting of a stream of air at the boundary P1, thereby providing an improved aerodynamic property. Note also that owing to the solid configuration of the side spoiler 40, as explained above, the side spoiler 40 provides an improved visual appeal as well as an improved design property.

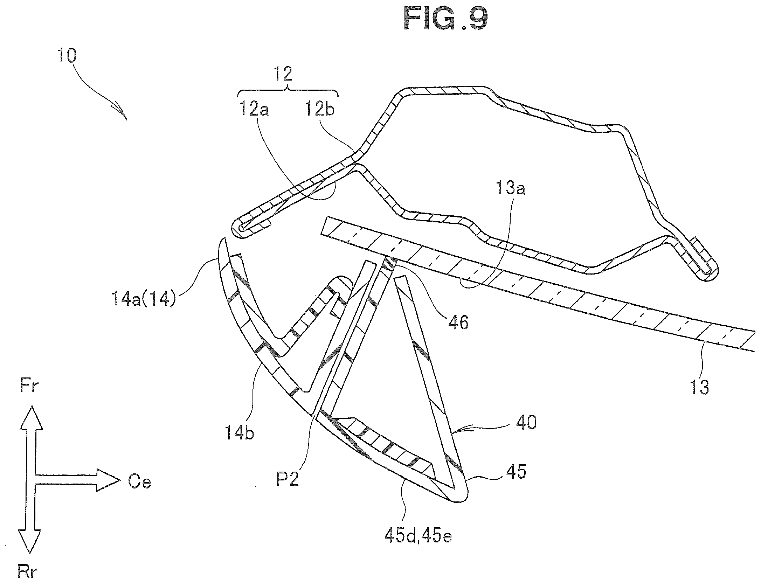

Turning now to FIG. 9, at the boundary P2 between a vehicle-widthwise end 14a of the rear spoiler 14 and an upper end part 45d of the outer member 45 (side spoiler 40), their respective design surfaces 45e, 14b facing laterally outside of the vehicle are laid flush with each other. Stated otherwise, the vehicle-outside-facing design surface 45e of the outer member 45 (side spoiler 40) and the vehicle-outside-facing design surface 14b of the rear spoiler 14 jointly form a continuous curved surface.

Owing to the design surfaces 14b, 45e laid flush with each other, the travel wind is caused to smoothly flow rearward, thereby providing an improved aerodynamic property. Note also that being laid flush with each other, the rear spoiler 14 and the side spoiler 40 look singly, whereby the design property is further improved.

Although the side spoiler employed in the vehicle according to the present invention has been described above in relation to an example embodiment wherein it is attached to the left side edge part of the rear window glass pane, the side spoiler may be similarly configured for attachment to a right side edge part of the rear window glass pane. It will also be appreciated by a skilled artisan that although the side spoiler applied to the vehicle according to the present invention has been described as being attached to the vehicle body through the tailgate, it may be attached to the vehicle body directly.

## Claims

1. A vehicle rear structure (10) including a rear quarter window glass pane (50), a rear spoiler (14), a lid lamp unit (30), a rear window glass pane (13) and a side spoiler (40) extending along a side edge part (13a) of the rear window glass pane (13),
wherein the side spoiler (40) comprises:
an inner member (42) attached to a body (11) of the vehicle rear structure (10); and
an outer member (45) laid over and adhered to the inner member(42) and forming a vehicle-widthwise side edge surface provided to the side edge part (13a) of the rear window glass pane (13),
wherein the inner member has a base part (42a) mounted to the body, and an extension part (42b) extending from the base part and engaged with the outer member,
wherein the outer member (45) includes a vehicle-forward end (45c), a rear end, an upper end part (45d), a lower end part(45b),
the vehicle-forward end (45c) is curved laterally inwardly of the body further than outwardly facing design surfaces (51a, 52a) of the rear quarter window glass pane (50);
the rear end is adhered to the side edge surface of the rear window glass pane (13) by a seal member (46);
at the boundary (P2) between a vehicle-widthwise end (14a) of the rear spoiler (14) and the upper end part (45d), their respective design surfaces (45e, 14b) facing laterally outside of the vehicle are laid flush with each other and jointly form a continuous curved surface; and
the lower end (45b) is laid underneath an upper end part of a lid lamp body part (31) of the lid lamp unit (30) and is curved to extend away from an adjacent end of the lid lamp body part (31) of the lid lamp unit (30).

2. The vehicle rear structure of claim 1, wherein the inner member is made from an ABS resin.

## Patentansprüche

1. Fahrzeugheckstruktur (10), die eine hintere seitliche Fensterglasscheibe (50), einen Heckspoiler (14), eine Deckel-Lampeneinheit (30), eine Heckfensterglasscheibe (13) und einen Seitenspoiler (40), der sich entlang einem seitlichen Randteil (13a) der Heckfensterglasscheibe (13) erstreckt, enthält, wobei der Seitenspoiler (40) aufweist:
ein inneres Element (42), das an einem Körper(11) der Fahrzeugheckstruktur (10) angebracht ist; und
ein äußeres Element (45), das auf dem inneren Element (42) aufliegt und daran haftet und eine Fahrzeugbreiten-Seitenrandfläche bildet, die an dem Seitenrandteil (13a) der Heckfensterglasscheibe (13) vorgesehen ist,
wobei das innere Element ein Basisteil (42a) aufweist, das an dem Körper angebracht ist, sowie ein Verlängerungsteil (42b), das sich von dem Basisteil erstreckt und mit dem äußeren Element in Eingriff steht,
wobei das äußere Element (45) ein Fahrzeug-vorderes Ende (45c), ein hinteres Ende, ein oberes Endteil (45d) und ein unteres Endteil (45b) enthält,
das Fahrzeug-vordere Ende (45c) seitlich einwärts des Körpers weiter gekrümmt ist als nach nach außen weisende Designoberflächen (51a, 52a) der hinteren seitlichen Fensterglasscheibe (50);
das hintere Ende an der Seitenrandfläche der Heckfensterglasscheibe (13) durch ein Dichtungselement (46) haftet;
an der Grenze (P2) zwischen einen Fahrzeugbreitenende (14a) des Heckspoilers (14) und dem oberen Endteil (45d) ihre jeweiligen Designoberflächen (45e, 14b), die seitlich zur Außenseite des Fahrzeugs weisen, miteinander fluchten und gemeinsam eine durchgehende gekrümmte Oberfläche bilden; und
das untere Ende (45b) unter einem oberen Endteil einer Deckel-Lampeneinheit (31) der Deckel-Lampeneinheit (30) liegt und so gekrümmt ist, dass es sich von einem benachbarten Ende der Deckel-Lampeneinheit (31) der Deckel-Lampeneinheit (30) weg erstreckt.

2. Die Fahrzeugheckstruktur von Anspruch 1, wobei das innere Element aus ABS-Kunststoff hergestellt ist.

## Revendications

1. Structure arrière (10) de véhicule comprenant une vitre de quart arrière (50), un becquet arrière (14), une unité de lampe d'ouvrant de coffre (30), une vitre arrière (13) et un becquet latéral (40) s'étendant le long d'une partie de bord latérale (13a) de la vitre arrière (13),
dans laquelle le becquet latéral (40) comprend :
un élément interne (42) fixé sur une carrosserie (11) de la structure arrière (10) de véhicule ; et
un élément externe (45) placé et fixé sur l'élément interne (42) et formant une surface de bord latérale dans le sens de la largeur du véhicule prévue sur la partie de bord latérale (13a) de la vitre arrière (13),
dans laquelle l'élément interne a une partie de base (42a) montée sur la carrosserie, et une partie d'extension (42b) s'étendant à partir de la partie de base, et mise en prise avec l'élément externe,
dans laquelle l'élément externe (45) comprend une extrémité avant de véhicule (45c), une extrémité arrière, une partie d'extrémité supérieure (45d), une partie d'extrémité inférieure (45b),
l'extrémité avant de véhicule (45c) est davantage incurvée latéralement vers l'intérieur de la carrosserie que les surfaces de conception orientées vers l'extérieur (51a, 52a) de la vitre de quart arrière (50) ;
l'extrémité arrière est fixée sur la surface de bord latérale de la vitre arrière (13) par un élément formant joint d'étanchéité (46) ;
à la limite (P2) entre une extrémité dans le sens de la largeur du véhicule (14a) du becquet arrière (14) et la partie d'extrémité supérieure (45d), leurs surfaces de conception (45e, 14b) respectives se faisant face latéralement vers l'extérieur du véhicule, sont posées de niveau les unes par rapport aux autres et forment conjointement une surface incurvée continue ; et
l'extrémité inférieure (45b) est posée au-dessous d'une partie d'extrémité supérieure d'une partie de corps de lampe d'ouvrant de coffre (31) de l'unité de lampe d'ouvrant de coffre (30) et est incurvée pour s'étendre à distance d'une extrémité adjacente de la partie de lampe d'ouvrant de coffre (31) de l'unité de lampe d'ouvrant de coffre (30).

2. Structure arrière de véhicule selon la revendication 1, dans laquelle l'élément interne est réalisé à partir d'une résine ABS.
